# EUROPÄISCHE PATENTSCHRIFT

(11) **EP 2 875 972 B1**
(45) Veröffentlichungstag und Bekanntmachung des Hinweises auf die Patenterteilung: **31.10.2018**
(21) Anmeldenummer: 14003183.2
(22) Anmeldetag: 15.09.2014
(51) Int. Cl.: B60D 1/54

(54) **Anhängekupplung mit einer Fixiereinrichtung**
Draw bar with a fixing device
Attelage doté d'un dispositif de fixation

(30) Priorität: 08.11.2013 DE 102013018735
(43) Veröffentlichungstag der Anmeldung: 27.05.2015
(73) Patentinhaber: WESTFALIA - Automotive GmbH, 33378 Rheda-Wiedenbrück (DE)
(72) Erfinder: BÜSCHER, Maik, 33442 Herzebrock-Clarholz (DE); LUBRITZ, Marcel, 33602 Bielefeld (DE); PÖTTING, Wolfgang, 59302 Oelde (DE)
(74) Vertreter: Patentanwälte Bregenzer und Reule Partnerschaftsgesellschaft mbB

(56) Entgegenhaltungen:
- EP-A1- 1 288 026
- EP-A1- 1 902 870
- EP-A2- 2 277 724
- DE-B3- 10 252 722

## Beschreibung

Die Erfindung betrifft eine Anhängekupplung für ein Kraftfahrzeug, gemäß dem Oberbegriff des Anspruchs 1.

Eine derartige Anhängekupplung ist beispielsweise in EP 2 277 724 beschrieben.

Eine Anhängekupplung aus EP 1 650 059 A1 ist um zwei Achsen anhand einer Kulissenführung schwenkbar und wird in der Gebrauchsstellung durch eine Anordnung von Formschlusskonturen stabil gehalten. Die Formschlusskonturen umfassen in der Art eines Kranzes ringförmig angeordnete Kugeln der Fahrzeughalterung sowie dazu passende Kugelkalotten an dem Kupplungsarm, die in der Gebrauchsstellung in Formschlusseingriff sind. Die Kugeln haben Vorteile bezüglich des Lösens des Formschlusses, sind jedoch bezüglich der Festigkeit und Belastbarkeit nachteilig. Alternativ ist es bei anderen Anhängekupplungen bekannt, beispielsweise Bolzen oder bolzenartige Vorsprünge vorzusehen, um den Kupplungsarm an der Fahrzeughalterung in der Gebrauchsstellung zu fixieren. Bolzen hingegen haben den Nachteil, dass sie sich insbesondere nach längeren Fahrbetrieb schwer lösen lassen.

Davon ausgehend ist es die Aufgabe der vorliegenden Erfindung, eine Anhängekupplung mit einem verbesserten Fixierkonzept bereitzustellen.

Zur Lösung der Aufgabe ist eine Anhängekupplung gemäß der technischen Lehre des Anspruchs 1 vorgesehen.

Es ist ein Grundgedanke der vorliegenden Erfindung, dass unterschiedliche Formschlusskonturen zum Einsatz kommen, wobei die Paarung aus erstem Formschlusselement und erstem Gegen-Formschlusselement mit gekrümmten Konturen versehen ist, was im Sinne eines leichten Lösens des Formschlusseingriffs ist, zudem aber eine Keilflächenanordnung mit mindestens einer Keilfläche, vorzugsweise mehreren, beispielsweise einander gegenüberliegenden oder entgegengesetzten Keilflächen, vorgesehen ist, die einen zuverlässigen Halt des Kupplungsarms an der Fahrzeughalterung in der Fixierstellung, beispielsweise der Gebrauchsstellung, der Nichtgebrauchsstellung oder beiden, ermöglicht. An dieser Stelle sei erwähnt, dass selbstverständlich für die Gebrauchsstellung und die Nichtgebrauchsstellung unterschiedliche Formschlusskontur-Paarungen vorgesehen sein können. Besonders vorteilhaft ist jedoch das erfindungsgemäße Konzept für die Gebrauchsstellung, in welcher ein guter und fester Halt des Kupplungsarms an der Fahrzeughalterung gewünscht ist.

Weiterhin sind mehrere Schwenkachsen möglich, um die der Kupplungsarm schwenken kann. Sogar ein Kugelgelenk ist ohne weiteres möglich. Die Lageranordnung kann auch eine kombinierte Schwenk-Schiebelagerung vorsehen.

Die gekrümmte Kontur von erstem Formschlusselement und/oder erstem Gegen-Formschlusselement (nur eines der beiden kann eine gekrümmte Kontur aufweisen, während das andere auch nicht gekrümmt sein kann, zum Beispiel geradlinig oder polygonal) ermöglicht vorteilhaft auch einen Toleranzausgleich dergestalt, dass beispielsweise der Formschlusseingriff des zweiten Paares, das heißt der Keilflächen, besser gelingt, auch wenn die Anhängekupplung teilweise verschlissen ist oder Fertigungstoleranzen auftreten.

Weiterhin hat die Keilflächenanordnung Vorteile in Bezug auf die Verdrehsicherung, das heißt der Kupplungsarm wird durch die Keilflächen oder die eine Keilfläche verdrehsicher gehalten.

Bevorzugt sind die Keilflächen im Wesentlichen quer zur Fahrtrichtung des Kraftfahrzeugs orientiert, d.h. in Fahrzeuglängsrichtung hat der Kupplungsarm dann eine optimale Abstützung an der Fahrzeughalterung über die mindestens eine Keilfläche.

Das erste Formschlusselement und/oder das erste Gegen-Formschlusselement sind beispielsweise kugelförmig oder hohlkugelförmig. Bevorzugt ist es, wenn eines der beiden Elemente eine Kugel, das andere eine Kugelkalotte umfasst. Ganz besonders bevorzugt ist es, wenn eines der beiden Elemente, das erste Formschlusselement oder das erste Gegen-Formschlusselement, ausschließlich eine Kugel darstellt, sozusagen eine zentrale Kugel, während das andere Element davon eine entsprechende zentral angeordnete Kugelkalotte darstellt.

Eine Fortbildung der Erfindung stellt die folgende Variante dar, die in Kombination mit den Merkmalen des Anspruches 1 zu sehen ist. Das erste Formschlusselement und das erste Gegen-Formschlusselement sind zumindest während der Bewegung des Kupplungsarms in den Formschlusseingriff mit der Fahrzeughalterung nahe bei der Schwenkachse angeordnet. Der Krümmungsverlauf mindestens einer der Krümmungskonturen, beispielsweise der kugelige Verlauf, verläuft bogenförmig um die Schwenkachse herum. Somit kann also das erste Gegen-Formschlusselement um das erste Formschlusselement herum schwenken.
Bevorzugt ist es, wenn die Paarung aus erstem Formschlusselement und erstem Gegen-Formschlusselement näher bei der Schwenkachse ist als das Paar von zweitem Formschlusselement und zweitem Gegen-Formschlusselement. Dies trägt vorteilhaft dazu bei, dass die Anhängekupplung leicht aus dem Formschluss zwischen erstem Formschlusselement und erstem Gegen-Formschlusselement heraus gelangen kann, während die Keilflächenanordnung einen größeren Abstand zu der Schwenkachse hat. Durch den verhältnismäßig großen Abstand der beiden zweiten Formschlusselemente zu der Schwenkachse ist ein größerer Hebel bezüglich der Schwenkachse vorhanden, d.h. deren Formschluss kann mit größerer Kraft hergestellt und/oder wieder gelöst werden.

Das erste Formschlusselement und das erste Gegen-Formschlusselement bilden vorzugsweise ein Schwenklager für eine Schwenkverstellung des zweiten Formschlusselements und des zweiten Gegen-Formschlusselements in die Fixierstellung (oder aus der Fixierstellung in eine Lösestellung) . Die Paarung aus den beiden ersten Formschlusselementen kann beispielsweise eine Art Kugellager vorsehen. Es ist aber auch möglich, dass der Krümmungsverlauf beispielsweise durch einen Zylindermantel des ersten Formschlusselements oder des ersten Gegen-Formschlusselements definiert wird, das heißt dass nur eine einachsige Schwenkbarkeit gegeben ist.

Ein Querabstand zwischen einander gegenüberliegenden ersten Formschlussflächen des Paares aus erstem Formschlusselement und erstem Gegen-Formschlusselement in der Fixierstellung ist zweckmäßigerweise größer als ein Querabstand zwischen einander gegenüberliegenden zweiten Formschlussflächen des Paares aus zweitem Formschlusselement und zweitem Gegen-Formschlusselement, wobei die ersten und zweiten Formschlussflächen gleich orientiert sind, beispielsweise etwa quer zur Fahrzeuglängsrichtung verlaufen. Der etwas größere Querabstand zwischen ersten Formschlussflächen verhindert eine statische Überbestimmung, d.h. dass in der Regel die zweiten Formschlussflächen in Kontakt miteinander gelangen und flächig aneinander anliegen, während die ersten Formschlussflächen demgegenüber zumindest ein gewisses größeres Spiel haben.

Bei dem Paar aus erstem Formschlusselement und erstem Gegen-Formschlusselement ist zweckmäßigerweise mindestens eine Schrägfläche vorgesehen. Die Schrägfläche und die mindestens eine Keilfläche des Paares von zweitem Formschlusselement und zweitem Gegen-Formschlusselement sind zweckmäßigerweise gleich geneigt. Auch die Orientierung, beispielsweise quer zur Fahrzeuglängsachse, ist vorzugsweise gleich. Bevorzugt ist es jedoch, wenn die mindestens eine Schrägfläche eine stärkere Neigung zu einer in Richtung des Formschlusseingriffs verlaufenden Stellachse als die mindestens eine Keilfläche aufweist. Somit sorgt sozusagen die Keilfläche für eine statische Bestimmung, während die Schrägfläche des ersten Formschlusselements und/oder Gegen-Formschlusselements eine größere Toleranz aufweist.

Das Paar von erstem Formschlusselement und erstem Gegen-Formschlusselement stützt den Kupplungsarm an der Fahrzeughalterung zweckmäßigerweise in einer ersten, beispielsweise etwa vertikalen Achsrichtung, ab. Die erste Achsrichtung ist beispielsweise in Z-Richtung, das heißt vertikal verlaufend. Die erste Achsrichtung verläuft zu der mindestens einen Keilfläche des zweiten Formschlusselements und des zweiten Gegen-Formschlusselements im wesentlichen parallel. Dadurch stützt also die mindestens eine Keilfläche, vorzugsweise die Keilflächenanordnung als Ganzes, d.h. also alle Keilflächen oder mehrere Keilflächen, den Kupplungsarm quer zu der ersten Achsrichtung ab, beispielsweise in Fahrzeuglängsrichtung.

Unter mindestens einer Keilfläche des Paares aus zweitem Formschlusselement und Gegen-Formschlusselement verläuft zweckmäßigerweise eine Stützfläche zur Abstützung an einer Gegen-Stützfläche. Die Gegen-Stützfläche ist beispielsweise von einer Stützschulter gebildet. Mithin wirken also die Stützfläche und Gegen-Stützfläche in einer Kraftrichtung quer zur Wirk-Kraftrichtung, in welcher die Keilfläche abstützt.

Es kann vorgesehen sein, dass die mindestens eine Keilfläche zur Abstützung in einer horizontalen zweiten Achsrichtung, zum Beispiel einer X-Richtung, im Wesentlichen vertikal verläuft und/oder die Stützfläche und die Gegen-Stützfläche im wesentlichen horizontal verlaufen.

Die Paarung aus Stützfläche und Gegen-Stützfläche kann nunmehr stets wirksam sein, d.h. dass das Paar von erstem Formschlusselement und erstem Gegen-Formschlusselement, wenn es in Formschlusseingriff ist, die Stützfläche in Kontakt mit der Gegen-Stützfläche beaufschlagt. Mithin tragen also die Stützflächen zur Abstützung des Kupplungsarms beispielsweise beim Fahrbetrieb bei . Es ist aber auch die andere Variante möglich und beim Ausführungsbeispiel optional realisiert, dass nämlich die Stützfläche und die Gegen-Stützfläche in der Fixierstellung nur dann in Kontakt treten, wenn in der ersten Achsrichtung, zum Beispiel entlang einer Z-Achse, eine Stoßbelastung auftritt. Somit fangen die Stützflächen sozusagen eine Überlast auf.

Bevorzugt ist ein Fixierantrieb zum Verstellen der Formschlussanordnung in den Formschlusseingriff und/oder aus dem Formschlusseingriff vorgesehen. Der Fixierantrieb umfasst zweckmäßigerweise mindestens einen insbesondere elektrischen Antriebsmotor und/oder ein Getriebe. Weiterhin ist es möglich, dass der Formschlusseingriff durch eine Federanordnung herbeigeführt wird, das heißt dass der Fixierantrieb eine Federanordnung aufweist. Die Federanordnung dient zum Halten des Kupplungsarms in einer stabilen Lage.

Der Fixierantrieb kann zweckmäßigerweise auch ein Antrieb sein, der zum Verstellen des Kupplungsarms zwischen der Gebrauchsstellung und der Nichtgebrauchsstellung ausgestaltet ist. Mithin kann also auch ein Antrieb zum Verstellen des Kupplungsarms zwischen der Gebrauchsstellung und der Nichtgebrauchsstellung gleichzeitig den Fixierantrieb oder einen Teil davon darstellen.

Ein Antriebselement des Fixierantriebs ist zweckmäßigerweise zwischen dem Paar aus erstem Formschlusselement und erstem Gegen-Formschlusselement und dem Paar aus zweitem Formschlusselement und zweitem Gegen-Formschlusselement zwischen dem Fahrzeughalter und dem Kupplungsarm wirksam beziehungsweise greift dort an.

Besonders bevorzugt ist es, wenn die Kraftangriffspunkte sozusagen linear verlaufen. Das Antriebselement und die Paare aus den Formschlusselementen und Gegen-Formschlusselementen sind beispielsweise linear nebeneinander angeordnet.

Eine vorteilhafte Ausführungsform der Erfindung sieht vor, dass der Kupplungsarm in der Fixierstellung ausschließlich an den Paaren von erstem Formschlusselement und erstem Gegen-Formschlusselement sowie zweitem Formschlusselement und zweitem Gegen-Formschlusselement abgestützt ist. Weitere Formschlusselemente sind dann nicht vorhanden.

Eine vorteilhafte Ausgestaltung der Erfindung sieht eine Führungsanordnung, zum Beispiel eine Kulissenführung oder eine Anordnung entsprechend geneigter Schwenkachsen, zur Führung des Kupplungsarms zwischen der Gebrauchsstellung und der Nichtgebrauchsstellung vor. Die Führungsanordnung kann prinzipiell auch zu der Abstützung des Kupplungsarms in der Fixierstellung beitragen, zumindest in einem geringen Maße. Das muss aber nicht sein.

Die Führungsanordnung ist zweckmäßigerweise in einer Klemmstellung, in der die Formschlusskonturen in einem klemmenden oder ineinander gespannten Formschlusseingriff miteinander sind, zumindest im Wesentlichen, vorzugsweise ganz, kraftfrei. Selbstverständlich kann eine gewisse, kleinere Abstützung des Kupplungsarms an der Führungsanordnung auch in diesem Fall noch gegeben sein. Die Hauptlast der Abstützung des Kupplungsarms an der Fahrzeughalterung tragen jedoch die Formschlusskonturen der Formschlusselemente.

Zweckmäßigerweise ist vorgesehen, dass die Formschlusskonturen der Fahrzeughalterung an einem Fahrzeughaltekörper der Fahrzeughalterung angeordnet sind. Der Fahrzeughaltekörper weist die Formschlusskonturen vorzugsweise einstückig auf, beispielsweise in der Gestalt eines Gussteils oder Schmiedeteils. Weiterhin ist es vorteilhaft, wenn der Fahrzeughaltekörper blockartig ist. Der Fahrzeughaltekörper dient zur Befestigung der Anhängekupplung am Kraftfahrzeug.

Eine vorteilhafte Ausführungsform der Erfindung sieht vor, dass die Fahrzeughalterung mit einem einzigen Schraubbolzen mit einem Querträger einer Trägeranordnung aufweisenden und zur Befestigung am Heck des Kraftfahrzeugs verschraubt ist.

Vorteilhaft ist vorgesehen, dass ein einziger Schraubbolzen vorgesehen ist, der eine Fahrzeughalter-Montagefläche des Fahrzeughalters gegen eine erste Querträger-Stützfläche spannt, wobei der Schraubbolzen den Querträger durchsetzt und sich ein Kopf des Schraubbolzens oder eine auf den Schraubbolzen aufgeschraubte Mutter an einer zweiten Querträger-Stützfläche des Querträgers an seiner von dem Fahrzeughaltekörper abgewandten Seite abstützt, und dass exzentrisch zu einer Längsachse des Schraubbolzens zwischen dem Fahrzeughaltekörper und dem Querträger eine Verdrehsicherung vorgesehen ist, die einer Verdrehung des Fahrzeughaltekörpers gegenüber dem Querträger um die Längsachse des Schraubbolzens entgegenwirkt.

Mit dem Fahrzeughaltekörper ist die Anhängekupplung mit dem Kraftfahrzeug verbunden.

Es ist ein Grundgedanke dabei, dass anhand des Schraubbolzens, der sozusagen ein zentrales Befestigungselement darstellt, mit einer einfachen Bedienhandlung die gesamte Baueinheit der Fahrzeughalterung am Querträger befestigt wird. Man muss nur eine einzige Schraube oder Mutter betätigen, um die Fahrzeughalterung am Querträger und somit am Kraftfahrzeug zu befestigen.

Der eigentliche Kraftschluss zwischen der Fahrzeughalterung und dem Querträger wird durch den Schraubbolzen bereitgestellt, während die Verdrehsicherung den Formschluss darstellt.

Der Querträger kann in an sich bekannter Weise ein Profilkörper, insbesondere ein Hohlprofil, sein. Der Profilkörper kann einen geschlossenen oder seitlich offenen, z.B. U-förmigen, Querschnitt haben.

Beispielsweise hat der Querträger eine im Querschnitt polygonale oder runde Außenkontur.

Die Verdrehsicherung kann in unterschiedlichster Form ausgestaltet sein, wobei nachfolgend einige Varianten beschrieben sind. Diese Varianten können selbstverständlich auch in Kombination miteinander vorgesehen sein.

Eine in der Zeichnung dargestellte Ausführungsform der Erfindung sieht vorteilhaft vor, dass die Verdrehsicherung einen bolzenartigen Verdrehsicherungsvorsprung umfasst, der sich zwischen dem Querträger und dem Fahrzeughaltekörper erstreckt.

Beispielsweise ist der Verdrehsicherungsvorsprung am Fahrzeughaltekörper angeordnet und steht in Richtung des Querträgers vor.

Dort greift der Verdrehsicherungsvorsprung beispielsweise in die Wand ein, welche die erste Querträger-Stützfläche bereitstellt. Es ist auch möglich, dass der Verdrehsicherungsvorsprung diese Wand durchdringt oder in diese eindringt. Weiterhin ist es vorteilhaft, wenn der Verdrehsicherungsvorsprung eine Spitze hat, die sich sozusagen von selbst beim Anziehen der Verschraubung des Schraubbolzens (des Schraubbolzens selbst oder einer Mutter) in die Querträger-Stützfläche hinein arbeitet, in diese beispielsweise mit der Spitze eindringt.

Der Verdrehsicherungsvorsprung ist beispielsweise in die Fahrzeughalter-Montagefläche eingesteckt oder eingepresst oder eingeschraubt. Es ist aber auch möglich, dass der Verdrehsicherungsvorsprung einstückig mit der Fahrzeughalter-Montagefläche ist. Weiterhin ist es denkbar, dass mehrere Verdrehsicherungsvorsprünge in dieser Art vorgesehen sind.

Die Verdrehsicherung umfasst beispielsweise Verdrehsicherungsformschlusskonturen, zum Beispiel Prägestrukturen, Riffelungen oder dergleichen, die an der Fahrzeughalter-Montagefläche und/oder der ihr zugewandten ersten Querträger-Stützfläche vorgesehen sind.

Es ist aber auch möglich, das Umfangskonturen am Querträger und der Fahrzeughalterung die Verdrehsicherung darstellen, indem sie formschlüssig ineinander greifen. Beispielsweise ist an der Fahrzeughalter-Montagefläche eine Vertiefung vorhanden oder ist diese als eine Vertiefung ausgestaltet und dient zur formschlüssigen Aufnahme des Querträgers. Der Querträger kann beispielsweise in einer Art Rinne oder Mulde der Fahrzeughalterung verdrehsicher aufgenommen sein, während der Schraubbolzen den festen Halt der beiden Komponenten aneinander, zum Beispiel eine Zugfestigkeit, darstellt.

Besonders bevorzugt ist es, wenn die Anhängekupplung ein Distanzelement, zum Beispiel eine Distanzhülse, umfasst. Das Distanzelement stützt sich mit einem Längsende an einer Innenseite einer ersten Wand des Querträgers ab, die außenseitig die erste Querträger-Stützfläche bereitstellt. Der Querträger ist in diesem Fall ein Profilträger, das heißt er ist innen hohl. Im Innenraum des Querträgers ist das Distanzelement angeordnet. Mit seinem zweiten Längsende stützt das Distanzelement den Kopf des Schraubbolzens oder die aufgeschraubten Mutter ab. Es kann zwischen dem Kopf und dem zweiten Längsende beispielsweise auch eine Unterlegscheibe vorgesehen sein. Das zweite Längsende fluchtet vorzugsweise mit der zweiten Querträger-Stützfläche oder ist jedenfalls im zumindest noch nicht gespannten Zustand des Schraubbolzens unwesentlich hinter die zweite Querträger-Stützfläche zurück versetzt, so dass sich der Kopf oder die Mutter neben dem zweiten Längsende des Distanzelements an der zweiten Querträger-Stützfläche abstützt. Das Distanzelement verhindert, dass der Schraubbolzen bzw. die Mutter den Querträger sozusagen zusammen drückt und sorgt für eine gleichmäßige Kraftverteilung.

An der Fahrzeughalter-Montagefläche ist zweckmäßigerweise eine Aufnahme, zum Beispiel eine Schraubaufnahme, für den Schraubbolzen vorgesehen. Es ist auch möglich, dass der Schraubbolzen mit der Fahrzeughalter-Montagefläche einstückig ist oder mit dieser verschweißt, verklebt oder in sonstiger Weise stoffschlüssig verbunden ist.

Selbstverständlich braucht der Schraubbolzen nicht über seine gesamte Längslänge mit einer Schraubkontur bzw. einem Gewinde versehen sein. Es genügt, wenn er dort, wo er beispielsweise in die Montagefläche des Fahrzeughalters eingeschraubt ist oder wo die Mutter aufgeschraubt ist, mit einem Gewinde versehen ist. Es ist ferner möglich, dass der Schraubbolzen einerseits in den Fahrzeughalter eingeschraubt ist, andererseits mit einer Mutter verschraubt ist, die dann den Kopf darstellt. Mit anderen Worten ist beispielsweise ein Schraubbolzen möglich, der an seinen beiden Längsendbereichen mit einem Gewinde versehen ist.

Ein Durchmesser des Schraubbolzens ist zweckmäßigerweise sehr groß. Bevorzugt ist es, wenn der Durchmesser mindestens die Hälfte, vorzugsweise mindestens zwei Drittel der Querbreite der Fahrzeughalter-Montagefläche hat. Mithin wird also ein massiver Schraubbolzen verwendet, der in Bezug auf Zugfestigkeit und Scherfestigkeit optimal ist.

Bevorzugt ist eine Führungsanordnung, zum Beispiel eine Kulissenführung, zur Führung des Kupplungsarms zwischen der Gebrauchsstellung unter Nichtgebrauchsstellung vorgesehen. Die Führungsanordnung ist vorzugsweise an dem Fahrzeughaltekörper angeordnet. Die Führungsanordnung kann beispielsweise ein Führungsgehäuse, zum Beispiel einen Kulissenkasten, umfassen.

Der Fahrzeughaltekörper ist zweckmäßigerweise in der Art eines Halteblocks ausgestaltet.

Mithin ist es vorteilhaft, wenn der Fahrzeughaltekörper eine massive, blockartige Gestalt hat.
- Figur 1: eine perspektivische Schrägansicht einer Anhängekupplung gemäß der Erfindung in einer ersten Variante in Gebrauchsstellung,
- Figur 2: eine perspektivische Schrägansicht der Anhängekupplung gemäß Figur 1 in Nichtgebrauchsstellung,
- Figur 3: die Anhängekupplung gemäß Figur 2, jedoch mit von der Fahrzeughalterung entfernten Kupplungsarm,
- Figur 4: einen Teil der Fahrzeughalterung der Anhängekupplung gemäß der vorstehenden Figuren mit beinahe in Formschlusseingriff stehendem Kupplungsarm,
- Figur 5: eine Ansicht der Fahrzeughalterung gemäß Figur 4 von einer Seite her, aus der Formschlusskonturen des Kupplungsarms mit ihr in Eingriff gelangen können,
- Figur 6: einen fahrzeugseitigen Teil des Kupplungsarms der Anhängekupplung gemäß der vorstehenden Figuren,
- Figur 7: eine Seitenansicht der Anhängekupplung gemäß Figur 1,
- Figur 8: eine Schnittdarstellung der Anhängekupplung gemäß Figur 7, etwa entlang einer Schnittlinie A-A,
- Figur 9: eine Variante der Anhängekupplung gemäß Figur 1 mit einem alternativen Befestigungskonzept zur Befestigung an einer Trägeranordnung eines Kraftfahrzeugs,
- Figur 10: eine Ansicht der Anhängekupplung gemäß Figur 9, etwa entsprechend der Darstellung gemäß Figur 2,
- Figur 11: die Anhängekupplung gemäß Figuren 9-10, etwa entsprechend der Darstellung gemäß Figur 4,

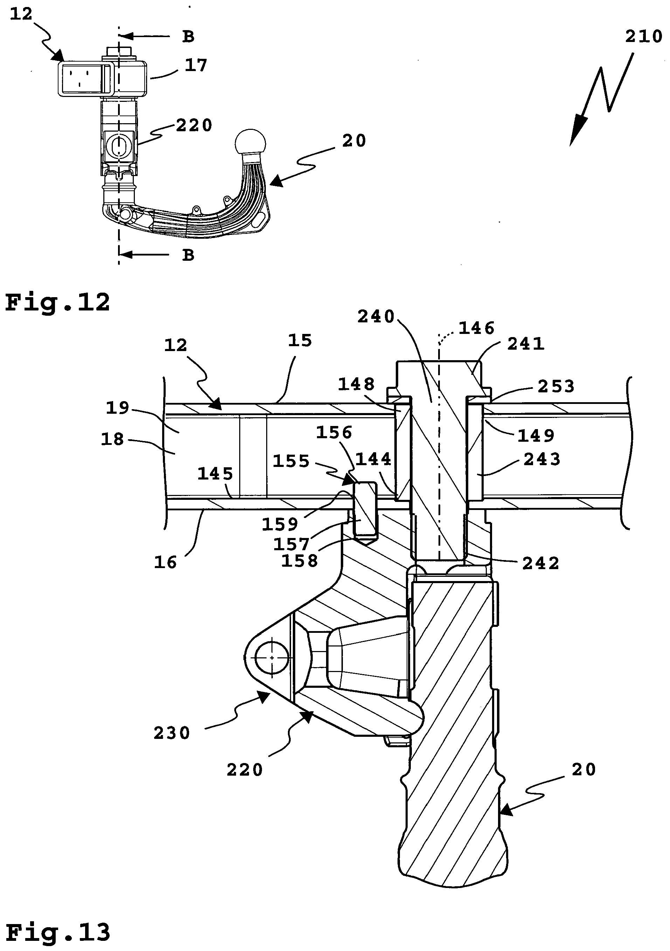

- Figur 12: eine Seitenansicht der Anhängekupplung gemäß Figuren 9-11, in einer Ansicht entsprechend Figur 7,
- Figur 13: eine Querschnittsansicht der Anhängekupplung gemäß Figur 12, etwa entlang einer Schnittlinie B-B in Figur 12.

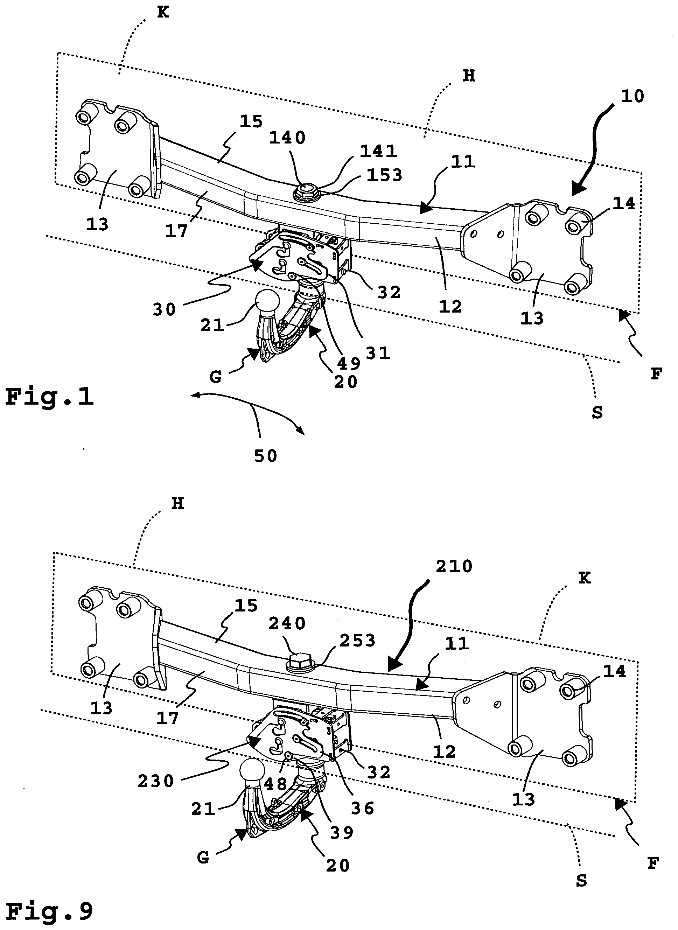

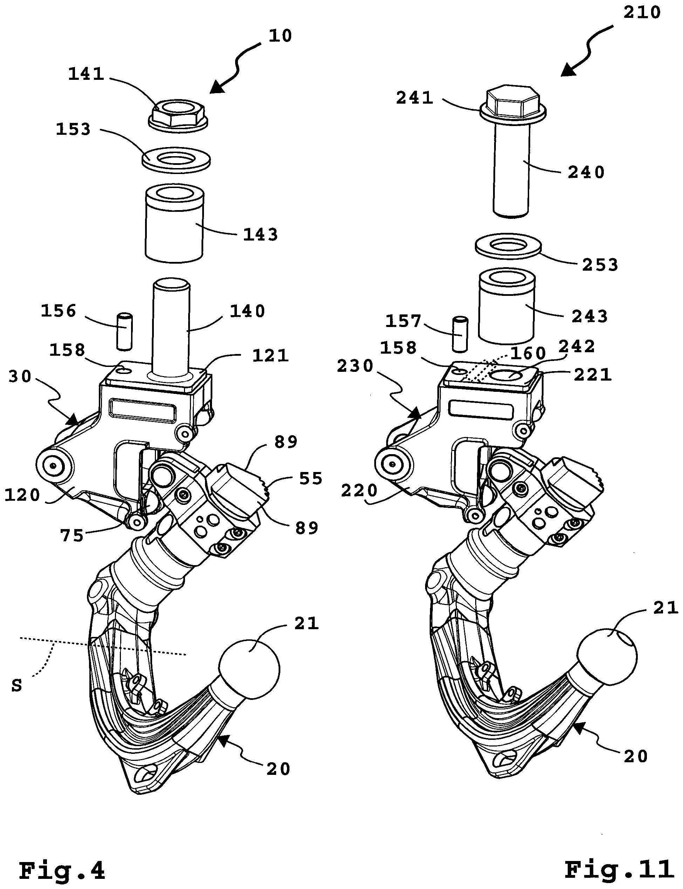

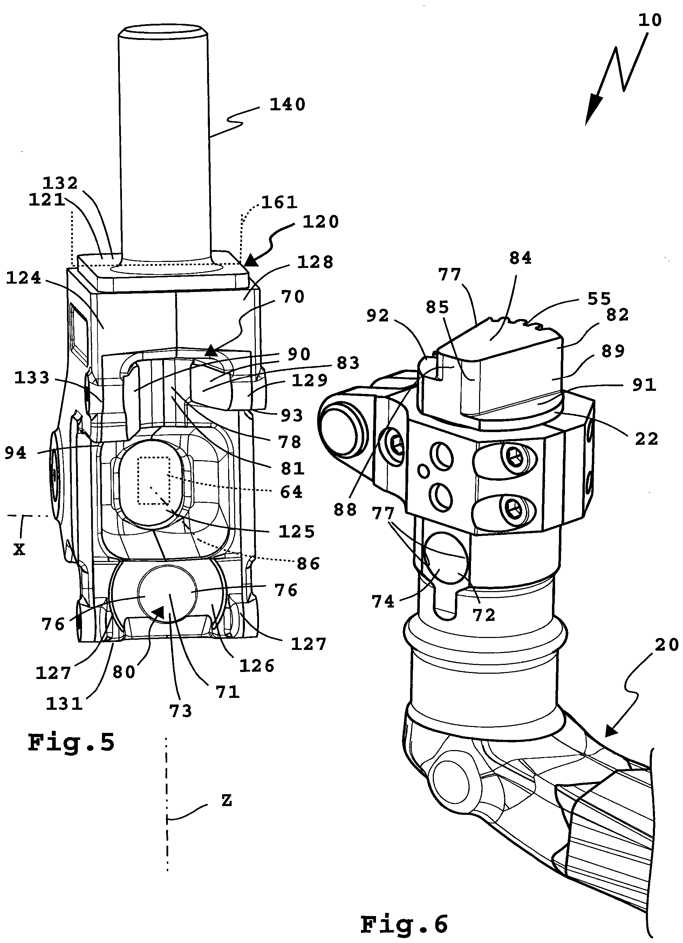

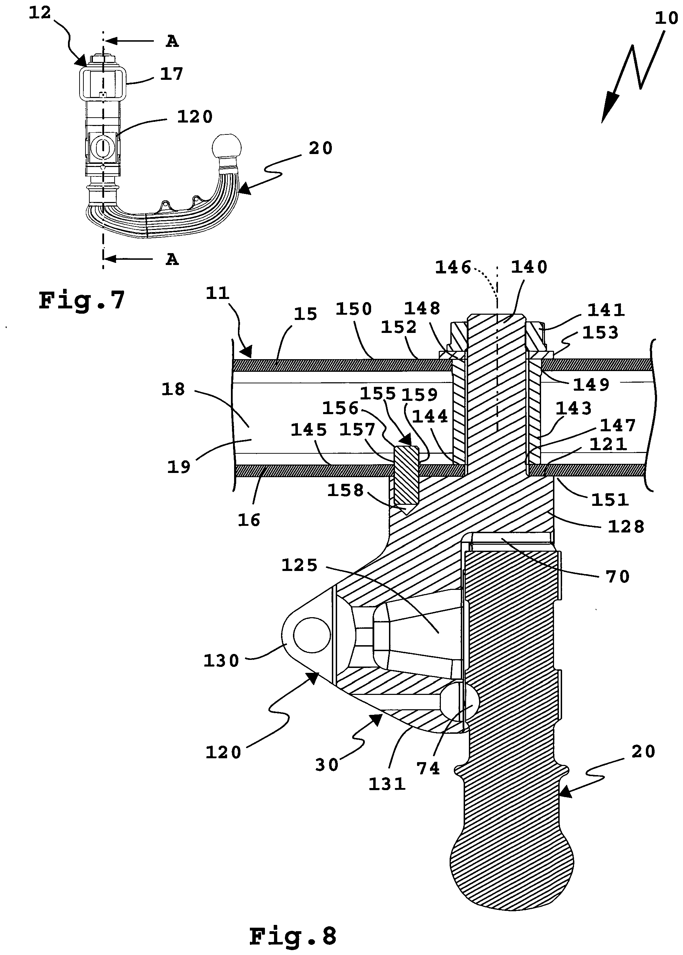

In der Zeichnung sind zwei Ausführungsformen einer erfindungsgemäßen Anhängekupplung gezeigt, wobei die Figuren 1 bis 8 die erste Variante und die folgenden Figuren die zweite Variante darstellen. Gleiche oder gleichartige Komponenten sind mit denselben Bezugsziffern versehen. Zur Verdeutlichung der Unterschiede der zweiten Variante gegenüber der ersten Variante sind bei der zweiten Variante Bezugsziffern ab 200 verwendet.

Eine Anhängekupplung 10, 210 ist an einer fahrzeugfest befestigbaren Trägeranordnung 11 angeordnet. Die Trägeranordnung 11 kann an einem Kraftfahrzeug F, nämlich dessen Heck H, befestigt werden. Ein Querträger 12 verläuft in Querrichtung des Kraftfahrzeugs F und ist mit Seitenträgern 13, beispielsweise plattenartigen oder in Fahrzeuglängsrichtung (nicht dargestellt) verlaufenden Seitenträgern, mit einer Karosserie K des Kraftfahrzeugs F verbunden. Dieses ist beispielsweise ein Kraftfahrzeug mit Verbrennungsmotor oder Elektromotor oder beidem, insbesondere ein Personenkraftwagen.

Die Seitenträger 13 sind beispielsweise anhand von Schrauben 14 mit der Karosserie K verschraubt. Während die Seitenträger 13 plattenartig sind, ist der Querträger 12 von einem Hohlprofil gebildet, das eine obere Wand 15, eine untere Wand 16 sowie in Fahrtrichtung hinten eine Wand 17 und in Fahrtrichtung vorn eine Wand 18 hat.

Ein Kupplungsarm 20 der Anhängekupplung 10, 210 weist einen Kuppelkörper 21, zum Beispiel eine Kugel, auf und ist mit einem Lagerabschnitt 22 an einer Fahrzeughalterung 30, 230 gehalten. Von dem Lagerabschnitt 22 erstreckt sich ein mittlerer Abschnitt 23 sowie ein hochstehender Abschnitt 24 des Kupplungsarms weg, d.h. insgesamt hat der Kupplungsarm 20 eine bogenförmige Gestalt, worauf es jedoch im einzelnen nicht ankommt. Am Kupplungsarm 20 sind weiterhin eine Halterung 25 für eine nicht dargestellte Steckdose sowie eine Öse 26 für ein Abreißseil vorgesehen.

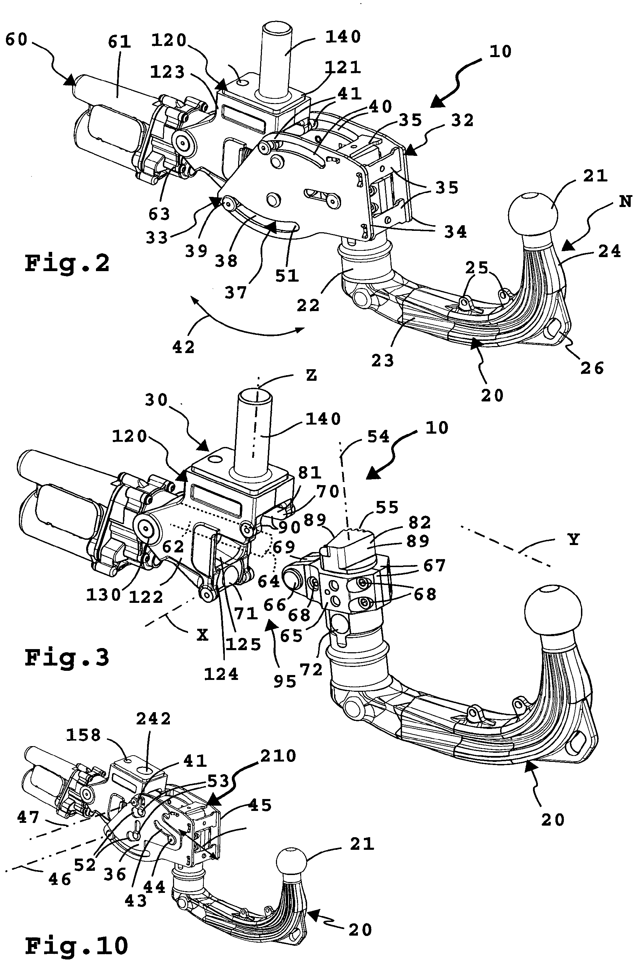

Der Kupplungsarm 20 ist an der Fahrzeughalterung 30, 230 anhand einer Lageranordnung 31 zwischen einer Gebrauchsstellung G (zum Beispiel Figur 1) und einer Nichtgebrauchsstellung N (zum Beispiel Figur 2) verstellbar. In der Gebrauchsstellung G steht der Kupplungsarm 20 nach hinten vor das Heck H des Kraftfahrzeugs F, zum Beispiel vor den Stoßfänger S, vor, so dass ein Anhänger an den Kuppelkörper 21 angekuppelt werden kann. In der Nichtgebrauchsstellung N ist der Kupplungsarm 20 zum Heck H des Kraftfahrzeugs F hin verstellt, beispielsweise hinter und/oder unter dem Stoßfänger S zurück verstellt, so dass er von hinten auf das Kraftfahrzeug F her gesehen normalerweise nicht oder kaum erblickt werden kann.

Die Fahrzeughalterung 30, 230 umfasst einen Fahrzeughaltekörper 120, 220, der am Querträger 12 festgelegt ist, beispielsweise verschraubt. Der Fahrzeughaltekörper 120, 220 dient also zur Befestigung der Anhängekupplung 10 am Kraftfahrzeug K.

Der Fahrzeughaltekörper 120, 220 gibt dem Kupplungsarm 20 in der Gebrauchsstellung G Halt, stellt also sozusagen die tragende und hauptsächlich beim Fahrbetrieb belastete Komponente dar. Die Lageranordnung 31 hingegen ist während der Verstellung des Kupplungsarms 20 zwischen der Gebrauchsstellung G und der Nichtgebrauchsstellung N im Einsatz und ist in der Gebrauchsstellung G im Wesentlichen kraftfrei oder jedenfalls kaum belastet.

Zur Verstellung des Kupplungsarms 20 zwischen der Gebrauchsstellung G und der Nichtgebrauchsstellung N dient eine Führungsanordnung 33.

Die Führungsanordnung 33 umfasst eine Kulissenführung mit einem Führungsgehäuse 32, das seinerseits schwenkbar und beweglich an dem Fahrzeughaltekörper 120, 220 gelagert ist.

Das Führungsgehäuse 32 umfasst Seitenwände 34, die parallel zu Seitenwänden 122 des Fahrzeughaltekörpers 120, 220 verlaufen. Die beiden Seitenwände 34 sind durch Querverbinder 35 an der vom Fahrzeughaltekörper 120, 220 entfernten oder abgewandten Seite miteinander verbunden. Die Querverbinder 35 sind ebenso wie die Seitenwände 34 zweckmäßigerweise als Blechteile oder jedenfalls dünne Wandteile ausgestaltet. Einer der Querverbinder 35 erstreckt sich beispielsweise an einer Oberseite des Gehäusekastens oder Führungsgehäuses 32 und verbindet dort die beiden Seitenwände 34. In der Gebrauchsstellung G verlaufen die beiden Querverbinder 35, die vorzugsweise plattenartig sind, etwa frontal und parallel zu einer Frontseite 124 des Fahrzeughaltekörpers 120, 220.

An den Seitenwänden 34 ist außenseitig jeweils ein Kulissenkörper 36 in Gestalt einer Platte vorgesehen, der die Bewegung des Kupplungsarms 20 bezüglich des Führungsgehäuses 32 und zudem auch die Bewegung des Führungsgehäuses 32 bezüglich des Fahrzeughaltekörpers 120, 220 führt und lenkt.

Eine Kulissenanordnung 37 der Lageranordnung 31 umfasst zum Beispiel Schwenkkulissen 38 an den Seitenwänden 34, in die Kulissenfolger 39 eingreifen. Die Kulissenfolger 39 stehen seitlich vor die Fahrzeughaltekörper 120, 220 vor, beispielsweise in der Nähe der Unterseiten 131 der Fahrzeughaltekörper 120, 220.

In gleicher Weise stehen Kulissenfolger 41 vor die Seitenwände 122 der Fahrzeughaltekörper 120, 220 vor und greifen in Schwenkkulissen 40 der Seitenwände 34 ein. Die Kulissenfolger 41 sind in der Nähe einer Oberseite 132 des Fahrzeughaltekörpers 120, 220 vorgesehen.

Die Kulissenfolger 41 und/oder die Kulissenfolger 39 sind vorzugsweise bolzenartig oder stiftartig.

Längsachsen der Kulissenfolger 39, 41 verlaufen in Richtung einer Schwenkachse 46 und einer Schwenkachse 47, um die der Kulissenkasten oder das Führungsgehäuse 32 zwischen der Gebrauchsstellung G und der Nichtgebrauchsstellung N sequenziell schwenkt.

In der in den Figuren 2 und 10 dargestellten Position ist der Kulissenfolger 41 in einer Aufnahme 49 des Kulissenkörpers 36 aufgenommen (Figur 10), so dass er nicht mehr in der Schwenkkulisse 40 beweglich ist. Dann bilden die Kulissenfolger 41 die Schwenkachse 47, um die das Führungsgehäuse 32 schwenkt, wobei die Schwenkkulissen 38 an den Kulissenfolgern 39 geführt um die Schwenkachse 47 schwenken. Das ist als eine Schwenkbewegung 42 in Figur 2 angedeutet.

In der in der Figur 1 und 9 dargestellten Position hingegen sind die Kulissenfolger 39 blockiert, indem sie nämlich in Aufnahmen 48 des Kulissenkörpers 36 sozusagen gefangen sind. Dann schwenkt das Führungsgehäuse 32 um die durch die Kulissenfolger 39 definierte Schwenkachse 46. Das ist als eine Schwenkbewegung 50 in Figur 1 angedeutet.

Das Führungsgehäuse 32 und die Kulissenkörper 36 sind über Kulissenfolger 44 miteinander gekoppelt, die vor die Seitenwände 34 des Führungsgehäuses 32 vorstehen und in im Wesentlichen linear verlaufende Kulissen 43 der Kulissenkörper 36 eingreifen.

In einer Bewegungsphase, bei der die Kulissenfolger 41 in den Aufnahmen 49 anliegen und die Kulissenfolger 39 in Längsendbereichen 51 der Schwenkkulisse 38 anliegen, bewegen sich die Kulissenfolger 44 in den Kulissen 43 hin und her, wobei der Kulissenkörper 36 eine Hoch-Tief-Bewegung durchläuft. Dadurch wird die Bewegung des Führungsgehäuses 32 sozusagen umgesteuert, d.h. dass die Kulissenfolger 39, 41 in Eingriff oder außer Eingriff mit den Aufnahmen 48, 49 gelangen.

Zur weiteren Bewegungssteuerung und als zusätzliche Sicherung dienen L-förmige Kulissen 52 an den Kulissenkörpern 36, in die von den Seitenwänden 34 des Führungsgehäuses 32 abstehende Kulissenfolger 53 eingreifen.

Ausgehend von der Gebrauchsstellung G schwenkt das Führungsgehäuse 32 und mit diesem der Kupplungsarm 20 zunächst um die untere Schwenkachse 46. Dann dreht sich der Kupplungsarm 20 um die Längsachse seines Lagerabschnitts 22, nämlich um eine Schwenkachse 54. Dabei rollt eine Verzahnung 55, die am Lagerabschnitt 22, vorzugsweise dessen freien Längsende, des Kupplungsarms 20 vorgesehen ist, an einer in der Zeichnung nicht sichtbaren, an der in Fahrzeuglängsrichtung vorderen Innenseite der Seitenwand 34 vorgesehenen Zahnreihe ab. Gleichzeitig wird die Steuerscheibe oder der Kulissenkörper 36 dabei umgesteuert, d.h. der Kulissenfolger 44 führt eine Linearbewegung 45 in der Kulisse 43 durch. Dadurch wird die Schwenkachse 46 sozusagen inaktiv und die andere Schwenkachse 47 aktiv, das heißt die unteren Kulissenfolger 39 kommen außer Eingriff mit den Aufnahmen 48, so dass der Kupplungsarm 20 bis in die in Figur 2 dargestellte Nichtgebrauchsstellung N nach oben unter den Stoßfänger S schwenkt.

Als Schwenkantrieb und zusätzlich als Fixierantrieb dient dabei ein Antrieb 60 der Anhängekupplung 10, 210. Der Antrieb 60 umfasst einen Antriebsmotor 61, zum Beispiel einen elektrischen Motor, der eine Spindel 62 über ein Getriebe 63 antreibt. Die Spindel 62 durchdringt den Fahrzeughaltekörper 120, 220 und steht bis zu einer Aufnahme 70 des Fahrzeughaltekörpers 120, 220 für den Kupplungsarm 20 vor.

Der Antriebsmotor 61 und das Getriebe 63 sind an einer Antriebshalterung 130 der Fahrzeughalterung 30, 230, vorliegend des Fahrzeughaltekörpers 120, 220, festgelegt. Von dort erstreckt sich die Spindel 62 bis zu der Aufnahme 70 vor.

Die Spindel 62 ist anhand einer Anlenkung 64 mit dem Kupplungsarm 20 verbunden. Dieser hat am Lagerabschnitt 22 eine Manschette 65, deren beiden Schenkel 67 den Lagerabschnitt 22 klammerartig umgreifen. Die Schenkel 67 sind mittels Schrauben 68 miteinander verbunden. In einem Zwischenraum 69 zwischen den Schenkeln 67 ist ein Bolzen 66 vorgesehen, der mit der Anlenkung 64 oder jedenfalls mit der Spindel 62 verbunden ist.

An der Aufnahme 70, insbesondere am Fahrzeughaltekörper 120, 220, ist eine Vertiefung oder Aufnahme 125 für die Manschette 65 vorgesehen.

Die Spindel 62 erfüllt die Funktion eines Zugelements oder Zugstabes, d.h. mit anderen Worten es könnte auch ein reiner Linearantrieb anstelle des als Drehantrieb ausgestalteten Antriebs 60 vorgesehen sein. Die Spindel 62 zieht den Kupplungsarm 20 sozusagen von der Nichtgebrauchsstellung N in die Gebrauchsstellung G in die Aufnahme 70 hinein, wobei die vorgenannten Drehbewegungen und Auf- und Ab-Bewegungen stattfinden bzw. drückt oder schiebt den Kupplungsarm 20 aus der Gebrauchsstellung G in die Nichtgebrauchsstellung N. Man erkennt, das zumindest in der Gebrauchsstellung G das Führungsgehäuse 32 und jedenfalls die Lageranordnung 31 keine tragende Rolle mehr haben. Vielmehr ist der Kupplungsarm 20 in der Gebrauchsstellung G im Wesentlichen durch die nachfolgenden Formschluss-Maßnahmen zuverlässig an der Fahrzeughalterung 30, 230 und ganz konkret am Fahrzeughaltekörper 120, 220 gehalten.

Eine Formschlussanordnung 80 einer Fixiereinrichtung 95 zwischen dem Kupplungsarm 20 und der Fahrzeughalterung 30, 230, insbesondere dem Fahrzeughaltekörper 120, 220 stellt einen zuverlässigen Halt des Kupplungsarms 20 in der Gebrauchsstellung sicher. Die Formschlussanordnung 80 umfasst als ein gekrümmtes erstes Formschlusselement 71 eine Kugel 73, die zum Eingriff in ein ebenfalls gekrümmtes erstes Gegen-Formschlusselement 72 vorgesehen ist, nämlich eine Kugelkalotte 74. Die Kugelkalotte 74 und das Gegen-Formschlusselement 72 sind am Kupplungsarm 20, nämlich dessen Lagerabschnitt 22 vorgesehen, während das dazu komplementäre Formschlusselement 71 an dem Fahrzeughaltekörper 120, 220 vorgesehen ist. Beispielsweise befindet sich die Kugel 73 in der Nähe der Unterseite 131 an der Aufnahme 70 für den Kupplungsarm 20.

Die Formschlussaufnahme oder das Gegen-Formschlusselement 72 ist unterhalb der Anlenkung 64, jedenfalls der Manschette 65 vorgesehen. Oberhalb der Anlenkung 64 und der Manschette 65 befinden sich weitere Formschlusskonturen, nämlich als ein zweites Gegen-Formschlusselement 82 ein Keilvorsprung 84 am Kupplungsarm 20. Dieser ist zum Eingriff in ein Formschlusselement 81 vorgesehen, das eine Keilaufnahme 83 am Fahrzeughaltekörper 120, 220 umfasst.

Die Keilaufnahme 83 umfasst einen Boden 78, von dem sich Keilflächen 90 weg erstrecken, z.B. v-förmig. Der Keilvorsprung 84 hat eine frontale Stirnfläche 88, von der sich Keilflächen 89 weg erstrecken, ebenfalls v-förmig. Die Stirnfläche 88 liegt in der Regel nicht am Boden 78 an, außer beispielsweise bei einer Überbelastung oder bei einem Verschleiß nach längerem Betrieb der Anhängekupplung.

Beim Schwenken um die untere Schwenkachse 46 schwenkt der Kupplungsarm 20 mit seiner Kugelkalotte 74 sozusagen um die Kugel 73 herum, wobei die beiden Komponenten in Berührkontakt miteinander sein können, also eine Art Schwenklager 75 bilden, aber auch voneinander entfernt sein können. Jedenfalls dann, wenn die Kugelkalotte 74 formschlüssig mit der Kugel 73 ist und/oder auf der Kugel 73 aufliegt, nämlich der Gebrauchsstellung G, ist das Schwenklager 75 aktiv. Dann kann dieses sozusagen eine Lagerbasis für einen durch den Lagerabschnitt 22 gebildeten Hebel bilden, an dessen freiem Längsende sozusagen der Keilvorsprung 84 vorgesehen ist. Die auf Zug arbeitende Spindel 62 zieht sozusagen die Keilflächen 89 des Keilvorsprung 84 in Eingriff mit der Keilaufnahme 83 bzw. deren Keilflächen 90, wodurch der Kupplungsarm 20 sehr fest in die Fahrzeughalterung 30, 230 gespannt ist.

Die Keilflächen 89, 90 verlaufen etwa in Fahrzeugquerrichtung des Kraftfahrzeugs F, das heißt ihre Normalenrichtung ist etwa in Fahrzeuglängsrichtung des Kraftfahrzeugs F orientiert.

Die Keilflächen 89, 90 wirken also in X-Richtung, während die Abstützung in Z-Richtung durch das Formschlusselement 71 und das Gegen-Formschlusselement 72 geleistet wird.

Das Formschlusselement 71 und das Gegen-Formschlusselement 72 stützen auch in x-Richtung.

Eine Abstützung in x-Richtung, z.B. bei Überlast oder besonders starker Belastung, insbesondere Stoßbelastung, erfolgt aber auch durch Stützschultern 127, die den Kupplungsarm 20 im Bereich der Kugel 73 abstützen und eine Aufnahme für den Kupplungsarm 20 definieren.

Unterhalb der Keilflächen 89 sind Stützflächen 91, 92 vorgesehen, die sich insbesondere bei Überlast oder besonders starker Belastung, insbesondere Stoßbelastung, des Kupplungsarms 20 in Z-Richtung, an Gegen-Stützflächen 93, 94 der Fahrzeughalterung 30, 230 abstützen. Die Gegen-Stützflächen 93, 94 sind beispielsweise an seitlich vor die Frontseite 124 des Fahrzeughaltekörpers 120, 220 vorstehenden Stützschultern 129, 133 vorgesehen. Die Stützschultern 129, 133 befinden sich an einem oberen Vorsprung 128, der im wesentlichen die Formschlussanordnung mit dem zweiten Formschlusselement 81 aufnimmt.

Die Stützflächen 92, 91 sind unterschiedlich hoch bezüglich der Längsachsrichtung des Lagerabschnitts 22, vorliegend also der Schwenkachse 54 oder der Z-Achse in der Gebrauchsstellung G. Das ist eine optionale, nicht zwingende Maßnahme. Jedenfalls stützen die Stützflächen 91, 92 zusammen mit den Gegen-Stützflächen 93, 94 den Kupplungsarm 20 gegen ein Verkippen bezüglich der Fahrzeughalterung 30, 230 zusätzlich ab.

Damit der Keilvorsprung 84 sozusagen leicht in die Keilaufnahme 83 hinein findet, sind vorn, d.h. an seiner Schmalseite, Einführschrägen 85 vorgesehen.

Die kugelige Gestalt des Formschlusselements 71 bedingt, dass diese gekrümmte Schrägflächen 76 aufweist, die mit Schrägflächen 77, nämlich den Innenseiten der Kugelkalotte 74 zusammenwirken. Ein Querabstand zwischen den Schrägflächen 77 und 76 ist größer als ein Querabstand zwischen den Keilflächen 89, 90. Die Schrägflächen 76 und 77 haben also in der Fixierstellung ein vergleichsweise größeres Spiel relativ zueinander als die Keilflächen 89 und 90.

Zudem sind die Keilflächen 89, 90 bezüglich einer Zugachsrichtung des Zugelements des Fixier-Antriebs 60, nämlich der Längsachse der Spindel 62, die zugleich eine Stellachse 86 darstellt, flacher geneigt als Schrägflächen 76, 77.

Auch das Befestigungskonzept der Anhängekupplungen 10, 210 ist solide und zugleich einfach handhabbar.

Der Fahrzeughaltekörper 120, 220 hat an seiner Oberseite 132, d.h. dem Querträger 12 zugewandt, eine Fahrzeughalter-Montagefläche 121, 221. Diese liegt an der unteren Wand 16 des Querträgers 12 flächig an und wird von der unteren Wand 16 abgestützt.

Der Fahrzeughaltekörper 120, 220 ist mit dem Querträger 12 verschraubt. Dazu ist ein Schraubbolzen 140, 240 vorgesehen, der von der Fahrzeughalter-Montagefläche 121, 221 absteht und den Querträger 12 durchdringt.

Bei der Anhängekupplung 10 ist der Schraubbolzen 140 einstückig mit dem Fahrzeughaltekörper 120 oder jedenfalls fest an diesem festgelegt und hat an seinem freien Längsendbereich ein Schraubgewinde, auf das eine Mutter 141 aufschraubbar ist.

Der Schraubbolzen 240 der Anhängekupplung 210 hat einen Kopf 241 und ist mit seinem dem Kopf 241 entgegengesetzten Längsende in eine Schraubaufnahme 242 des Fahrzeughaltekörpers 220 eingeschraubt. Die Schraubaufnahme 242 befindet sich an der Fahrzeughalter-Montagefläche 221

Damit die beiden Schraubbolzen 140, 240 den Querträger 12 nicht zusammen drücken, ist in dessen Innenraum 19 ein Distanzelement 143, 243 angeordnet, dessen unteres Längsende 144 sich an der Innenseite 145 der Wand 16 abstützt. Das Längsende 144 des als Distanzhülse ausgestalteten Distanzelements 143 stützt sich dabei an demjenigen Wandabschnitt der Wand 16 ab, der eine Durchtrittsöffnung 147 für den Schraubbolzen 140, 240 begrenzt.

Das andere Längsende 148 des Distanzelements 143, 243 durchdringt eine Durchtrittsöffnung 149 an der oberen Wand 15 und steht fast bis zu deren Oberseite 150 nach oben vor oder ist allenfalls flächig bündig mit deren Oberseite 150.

Somit stützt sich also die Mutter 141 oder der Kopf 241 zum einen am Längsende 148 und zum andern an der eine Querträger-Stützfläche 152 bildenden Oberseite des Querträgers 12 ab. An der Unterseite des Querträgers 12, die eine weitere Querträger-Stützfläche 151 darstellt, ist die Fahrzeughalter-Montagefläche 121, 221 abgestützt.

Eine weitere Kraftverteilung des Kopfes 241 oder der Mutter 141 ist vorteilhaft, wofür beispielsweise eine Unterlegscheibe 153, 253 vorzugsweise vorgesehen ist.

Damit sich die Fahrzeughalterung 30, 230 nicht um die Längsachse 146 des Schraubbolzens 140, 240 verdrehen kann, ist als eine Verdrehsicherung 155 ein Verdrehsicherungsvorsprung 156 vorgesehen. Der Verdrehsicherungsvorsprung 156 ist beispielsweise durch einen Bolzenkörper 157 gebildet, der in eine Aufnahme 158 an der Fahrzeughalter-Montagefläche 121, 221 eingepresst und/oder eingeschraubt und/oder eingeklebt ist. Der Verdrehsicherungsvorsprung 156 greift in eine Verdrehsicherungsaufnahme 159, beispielsweise eine Durchtrittsöffnung, an der Querträger-Stützfläche 151, nämlich der unteren Wand 16 ein. Vorzugsweise durchdringt der Verdrehsicherungsvorsprung 156 diese Wand 16, was einen besonders sicheren Halt darstellt.

Man kann sich ohne weiteres vorstellen, dass beispielsweise eine Formschlussstruktur 160, zum Beispiel an der Fahrzeughalter-Montagefläche 221, vorgesehen ist, die mit einer in der Zeichnung nicht sichtbaren, komplementären Formschlussstruktur an der Querträger-Stützfläche 151, zum Beispiel einer Riffelung oder dergleichen, im Sinne einer Verdrehsicherung zusammen wirkt.

An der Fahrzeughalter-Montagefläche 221 kann auch eine Umfangskontur 161 zur formschlüssigen und somit verdrehsicheren Aufnahme des Querträgers 12 vorgesehen sein.

## Patentansprüche

1. Anhängekupplung für ein Kraftfahrzeug (F), mit einem Kupplungsarm (20) zum Ankuppeln eines Anhängers oder eines Hecklastenträgers, wobei der Kupplungsarm (20) an einer an dem Kraftfahrzeug (F) befestigbaren Fahrzeughalterung (30; 230) anhand einer Lageranordnung (31) zwischen einer zum Anhängen des Anhängers oder Tragen des Hecklastenträgers vorgesehenen Gebrauchsstellung (G) und einer zum Kraftfahrzeug (F) näher hin verstellten Nichtgebrauchsstellung (N) um zumindest eine Schwenkachse (46, 47, 54) schwenkbar gelagert ist, wobei die Anhängekupplung (10; 210) eine Fixiereinrichtung (95) zum Fixieren des Kupplungsarms (20) an der Fahrzeughalterung (30; 230) aufweist, wobei die Anhängekupplung (10; 210) zum Halten des Kupplungsarms (20) an der Fahrzeughalterung (30; 230) in der Gebrauchsstellung (G) und/oder der Nichtgebrauchsstellung (N) als einer Fixierstellung an der Fahrzeughalterung (30; 230) und dem Kupplungsarm (20) angeordnete Formschlusskonturen zu einem Formschlusseingriff miteinander aufweist, wobei die Formschlusskonturen mindestens ein erstes Formschlusselement (71) und ein erstes Gegen-Formschlusselement (72) aufweisen, und wobei mindestens das erste Formschlusselement (71) und/oder das erste Gegen-Formschlusselement (72) der Formschlusskonturen eine Krümmungskontur aufweist, **dadurch gekennzeichnet, dass** ein zweites Formschlusselement (81) und ein zweites Gegen-Formschlusselement (82) der Formschlusskonturen eine Keilflächenanordnung mit mindestens einer Keilfläche (89, 90) zum verdrehsicheren Halten des Kupplungsarms (20) an der Fahrzeughalterung (30; 230) bilden, wobei in der Fixierstellung das Paar von erstem Formschlusselement (71) und erstem Gegen-Formschlusselement (72) in Formschlusseingriff ist und eine Bewegung des Paares von zweitem Formschlusselement (81) und zweitem Gegen-Formschlusselement (82) in deren Formschlusseingriff im Sinne eines Verkeilens zulässt.

2. Anhängekupplung nach Anspruch 1, **dadurch gekennzeichnet, dass** das erste Formschlusselement (71) und/oder das erste Gegen-Formschlusselement (72) kugelförmig oder hohlkugelförmig sind, insbesondere eine Kugel (73) und eine Kugelkalotte (74) umfassen.

3. Anhängekupplung nach Anspruch 1 oder 2, **dadurch gekennzeichnet, dass** das erste Formschlusselement (71) und das erste Gegen-Formschlusselement (72) zumindest während der Bewegung des Kupplungsarms (20) in den Formschlusseingriff mit der Fahrzeughalterung (30; 230) nahe bei der Schwenkachse (46, 47, 54) angeordnet sind und ein Krümmungsverlauf mindestens einer der Krümmungskonturen bogenförmig um die Schwenkachse (46, 47, 54) herum verläuft.

4. Anhängekupplung nach einem der vorhergehenden Ansprüche, **dadurch gekennzeichnet, dass** das erste Formschlusselement (71) und das erste Gegen-Formschlusselement (72) ein Schwenklager für eine Schwenkverstellung des zweiten Formschlusselements (81) und des zweiten Gegen-Formschlusselements (82) in die Fixierstellung bilden.

5. Anhängekupplung nach einem der vorhergehenden Ansprüche, **dadurch gekennzeichnet, dass** in der Fixierstellung ein Querabstand zwischen einander gegenüberliegenden ersten Formschlussflächen des Paares aus erstem Formschlusselement (71) und erstem Gegen-Formschlusselement größer als ein Querabstand zwischen einander gegenüberliegenden und im wesentlichen gleich wie die ersten Formschlussflächen orientierten zweiten Formschlussflächen des Paares aus zweitem Formschlusselement (81) und zweitem Gegen-Formschlusselement (82) ist.

6. Anhängekupplung nach einem der vorhergehenden Ansprüche, **dadurch gekennzeichnet, dass** an dem Paar aus erstem Formschlusselement (71) und erstem Gegen-Formschlusselement (72) mindestens eine Schrägfläche vorgesehen ist, wobei die mindestens eine Schrägfläche und die mindestens eine Keilfläche (89, 90) des Paares von zweitem Formschlusselement (81) und zweitem Gegen-Formschlusselement (82) gleichsinnig geneigt sind und die mindestens eine Schrägfläche eine stärkere Neigung zu einer in Richtung des Formschlusseingriffs verlaufenden Stellachse (86) als die mindestens eine Keilfläche (89, 90) aufweist.

7. Anhängekupplung nach einem der vorhergehenden Ansprüche, **dadurch gekennzeichnet, dass** das Paar von erstem Formschlusselement (71) und erstem Gegen-Formschlusselement (72) den Kupplungsarm (20) an der Fahrzeughalterung (30; 230) in einer ersten, insbesondere im wesentlichen vertikalen Achsrichtung, beispielsweise einer Z-Richtung, abstützen, die zu der mindestens einen Keilfläche (89, 90) des zweiten Formschlusselements (81) und des zweiten Gegen-Formschlusselements (82) im wesentlichen parallel verläuft.

8. Anhängekupplung nach einem der vorhergehenden Ansprüche, **dadurch gekennzeichnet, dass** unter mindestens einer Keilfläche (89, 90) des Paares aus zweitem Formschlusselement und Gegen-Formschlusselement (82) eine quer zu der Keilfläche (89, 90) verlaufende Stützfläche (91, 92) zur Abstützung an einer Gegen-Stützfläche (93, 94), insbesondere an einer Stützschulter, angeordnet ist.

9. Anhängekupplung nach einem der vorhergehenden Ansprüche, **dadurch gekennzeichnet, dass** die mindestens eine Keilfläche (89, 90) zur Abstützung in einer horizontalen zweiten Achsrichtung, insbesondere einer X-Richtung, im wesentlichen vertikal verläuft und/oder die oder eine Stützfläche (91, 92) und die oder eine Gegen-Stützfläche (93, 94) im wesentlichen horizontal verlaufen.

10. Anhängekupplung nach Anspruch 8 oder 9, **dadurch gekennzeichnet, dass** die Stützfläche (91, 92) und die Gegen-Stützfläche (93, 94) in der Fixierstellung nur dann in Kontakt treten, wenn in der ersten Achsrichtung, zum Beispiel entlang einer Z-Achse, eine Stoßbelastung auftritt oder das Paar von erstem Formschlusselement (71) und erstem Gegen-Formschlusselement (72), wenn es in Formschlusseingriff ist, die Stützfläche (91, 92) in Kontakt mit der Gegen-Stützfläche (93, 94) beaufschlagt.

11. Anhängekupplung nach einem der vorhergehenden Ansprüche, **dadurch gekennzeichnet, dass** sie einen Fixierantrieb zum Verstellen der Formschlussanordnung in den Formschlusseingriff und/oder aus dem Formschlusseingriff aufweist.

12. Anhängekupplung nach Anspruch 11, **dadurch gekennzeichnet, dass** ein Antriebselement (62) des Fixierantriebs zwischen dem Paar aus erstem Formschlusselement und erstem Gegen-Formschlusselement (72) und dem Paar aus zweitem Formschlusselement (81) und zweitem Gegen-Formschlusselement (82) zwischen dem Fahrzeughalter und dem Kupplungsarm (20) angreift.

13. Anhängekupplung nach einem der vorhergehenden Ansprüche, **dadurch gekennzeichnet, dass** der Kupplungsarm (20) in der Fixierstellung ausschließlich an den Paaren von erstem Formschlusselement (71) und erstem Gegen-Formschlusselement (72) und zweitem Formschlusselement (81) und zweitem Gegen-Formschlusselement (82) abgestützt ist.

14. Anhängekupplung nach einem der vorhergehenden Ansprüche, **dadurch gekennzeichnet, dass** sie eine Führungsanordnung (33), insbesondere eine Kulissenführung, zur Führung des Kupplungsarms (20) zwischen der Gebrauchsstellung (G) und der Nichtgebrauchsstellung (N) aufweist, wobei die Führungsanordnung (33) in einer Klemmstellung, in der die Formschlusskonturen in einem klemmenden Formschlusseingriff miteinander sind, zumindest im Wesentlichen kraftfrei ist.

15. Anhängekupplung nach einem der vorhergehenden Ansprüche, **dadurch gekennzeichnet, dass** die Formschlusskonturen der Fahrzeughalterung (30; 230) an einem insbesondere blockartigen Fahrzeughaltekörper (120; 220) der Fahrzeughalterung (30; 230) angeordnet sind und/oder dass die Fahrzeughalterung (30; 230) mit einem einzigen Schraubbolzen (140; 240) mit einem Querträger (12) einer Trägeranordnung (11) aufweisenden und zur Befestigung am Heck (H) des Kraftfahrzeugs (F) verschraubt ist.

## Claims

1. Trailer coupling for a motor vehicle (F), with a coupling arm (20) for coupling-on a trailer or a rear load carrier, wherein the coupling arm (20) is pivotably mounted around at least one swivel axis (46, 47, 54) on a vehicle mounting (30; 230), attachable to the motor vehicle (F) with the aid of a bearing assembly, between a position of use (G) provided for attachment of the trailer or for support of the rear load carrier and an inoperative position (N) shifted closer to the motor vehicle (F), wherein the trailer coupling (10; 210) has a a fixing device (95) for fixing the coupling arm (20) to the vehicle mounting (30; 230), wherein the trailer coupling (10; 210) has, for holding the coupling arm (20) to the vehicle mounting (30; 230) in the position of use (G) and/or the inoperative position (N), interlocking contours arranged as a fixing position on the vehicle mounting (30; 230) and the coupling arm (20) for form-fitting engagement with one another, wherein the interlocking contours have at least one first interlocking element (71) and one first mating interlocking element (72), and wherein at least the first interlocking element (71) and/or the first mating interlocking element (72) of the interlocking contours have a curved contour, **characterised in that** a second interlocking element (81) and a second mating interlocking element (82) of the interlocking contours form a wedge surface arrangement with at least one wedge surface (89, 90) for anti-twist locking of the coupling arm (20) to the vehicle mounting (30; 230) wherein, in the fixing position, the pair of first interlocking element (71) and first mating interlocking element (72) is in interlocking engagement and allows a movement of the pair of second interlocking element (81) and second mating interlocking element (82) in their interlocking engagement for the purpose of wedging.

2. Trailer coupling according to claim 1, **characterised in that** the first interlocking element (71) and/or the first mating interlocking element (72) are spherical or hollow-spherical, in particular including a ball (73) and a spherical dome (74).

3. Trailer coupling according to claim 1 or 2, **characterised in that** the first interlocking element (71) and the first mating interlocking element (72) are located close to the swivel axis (46, 47, 54), at least during movement of the coupling arm (20) into interlocking engagement with the vehicle mounting (30; 230), and a curved course of at least one of the curved contours runs in a curve around the swivel axis (46, 47, 54).

4. Trailer coupling according to any of the preceding claims, **characterised in that** the first interlocking element (71) and the first mating interlocking element (72) form a swivel bearing for a swivelling movement of the second interlocking element (81) and the second mating interlocking element (82) into the fixing position.

5. Trailer coupling according to any of the preceding claims, **characterised in that** in the fixing position, a lateral space between opposite first interlocking faces of the pair of first interlocking element (71) and first mating interlocking element is greater than a lateral space between opposite second interlocking faces of the pair of second interlocking element (81) and second mating interlocking element (82) which have substantially similar orientation to the first interlocking faces,

6. Trailer coupling according to any of the preceding claims, **characterised in that** at least one inclined surface is provided on the pair of first interlocking element (71) and first mating interlocking element (72), wherein the inclined surface or surfaces and the wedge surface or surfaces (89, 90) of the pair of second interlocking element (81) and second mating interlocking element (82) are inclined in the same direction, and the inclined surface or surfaces has or have a stronger inclination to an adjusting axis (86) running in the direction of the interlocking engagement than the wedge surface or surfaces (89, 90).

7. Trailer coupling according to any of the preceding claims, **characterised in that** the pair of first interlocking element (71) and first mating interlocking element (72) support the coupling arm (20) on the vehicle mounting (30; 230) in a first axial direction, in particular substantially vertical, for example a Z-direction, which runs substantially parallel to the wedge surface or surfaces (89, 90) of the second interlocking element (81) and the second mating interlocking element (82).

8. Trailer coupling according to any of the preceding claims, **characterised in that** below at least one wedge surface (89, 90) of the pair of second interlocking element and mating interlocking element (82) there is arranged a support surface (91, 92) running transversely to the wedge surface (89, 90), for support at a mating support surface (93, 94), in particular at a support shoulder.

9. Trailer coupling according to any of the preceding claims, **characterised in that** the wedge surface or surfaces (89, 90) runs or run substantially vertically for support in a horizontal second axial direction, in particular an X-direction, and/or the or one support surface (91, 92) and the or one mating support surface (93, 94) run substantially horizontally.

10. Trailer coupling according claim 8 or 9, **characterised in that** the support surface (91, 92) and the mating support surface (93, 94) in the fixing position only come into contact if, in the first axial direction, for example along a Z-axis, an impact loading occurs or the pair of first interlocking element (71) and first mating interlocking element (72), when in interlocking engagement, pressure-loads the support surface (91, 92) into contact with the mating support surface (93, 94).

11. Trailer coupling according to any of the preceding claims, **characterised in that** it has a fixing drive to move the interlocking assembly into or out of interlocking engagement.

12. Trailer coupling according to any of the preceding claims, **characterised in that** a drive element (62) of the fixing drive acts, between the vehicle mounting and the coupling arm (20), between the pair of first interlocking element and first mating interlocking element (72) and the pair of second interlocking element (81) and second mating interlocking element (82).

13. Trailer coupling according to any of the preceding claims, **characterised in that** the coupling arm (20) in the fixing position is supported solely on the pairs of first interlocking element (71) and first mating interlocking element (72), and second interlocking element (81) and second mating interlocking element (82).

14. Trailer coupling according to any of the preceding claims, **characterised in that** it has a guide assembly (33), in particular a slotted link guide, to guide the coupling arm (20) between the position of use (G) and the inoperative position (N), wherein the guide assembly (33), in a clamping position in which the interlocking contours are in a clamping interlocking engagement with one another, is substantially free from force.

15. Trailer coupling according to any of the preceding claims, **characterised in that** the interlocking contours of the vehicle mounting (30; 230) are provided on a vehicle holder body (120; 220), in particular block-like, of the vehicle mounting (30; 230), and/or that the vehicle mounting (30; 230) is screwed by a single threaded bolt (140; 240) to a cross-member (12) having a support assembly (11) and for fixing to the rear (H) of the motor vehicle (F).

## Revendications

1. Attelage pour un véhicule automobile (F), avec un bras d'attelage (20) pour l'attelage d'une remorque ou d'un porte-charge arrière, dans lequel le bras d'attelage (20) est logé de manière pivotante autour d'au moins un axe de pivotement (46, 47, 54) au niveau d'une fixation de véhicule (30 ; 230) pouvant être fixée au niveau du véhicule automobile (F) à l'aide d'un agencement de paliers (31) entre une position d'utilisation (G) prévue pour accrocher la remorque ou supporter le porte-charge arrière et une position de non-utilisation (N) réglée plus près du véhicule automobile (F), dans lequel l'attelage (10 ; 210) présente un dispositif de fixation (95) pour la fixation du bras d'attelage (20) au niveau de la fixation de véhicule (30 ; 230), dans lequel l'attelage (10 ; 210) présente des contours à complémentarité de forme agencés au niveau de la fixation de véhicule (30 ; 230) et du bras d'attelage (20) pour retenir le bras d'attelage (20) au niveau de la fixation de véhicule (30 ; 230) dans la position d'utilisation (G) et/ou la position de non-utilisation (N) en tant qu'une position de fixation dans une prise à complémentarité de forme l'un avec l'autre, dans lequel les contours à complémentarité de forme présentent au moins un premier élément à complémentarité de forme (71) et un premier contre-élément à complémentarité de forme (72), et dans lequel au moins le premier élément à complémentarité de forme (71) et/ou le premier contre-élément à complémentarité de forme (72) des contours à complémentarité de forme présente un contour de courbure, **caractérisé en ce qu'**un deuxième élément à complémentarité de forme (81) et un deuxième contre-élément à complémentarité de forme (82) des contours à complémentarité de forme forment un agencement de surface de calage avec au moins une surface de calage (89, 90) pour retenir le bras d'attelage (20) au niveau de la fixation de véhicule (30 ; 230) sans possibilité de rotation, dans lequel la paire formée par le premier élément à complémentarité de forme (71) et le premier contre-élément à complémentarité de forme (72) est en prise à complémentarité de forme dans la position de fixation et permet un déplacement de la paire formée par le deuxième élément à complémentarité de forme (81) et le deuxième contre-élément à complémentarité de forme (82) dans sa prise à complémentarité de forme au sens d'un calage.

2. Attelage selon la revendication 1, **caractérisé en ce que** le premier élément à complémentarité de forme (71) et/ou le premier contre-élément à complémentarité de forme (72) sont sphériques ou sphériques creux, comprennent en particulier une sphère (73) et une calotte sphérique (74).

3. Attelage selon la revendication 1 ou 2, **caractérisé en ce que** le premier élément à complémentarité de forme (71) et le premier contre-élément à complémentarité de forme (72) sont agencés au moins pendant le déplacement du bras d'attelage (20) dans la prise à complémentarité de forme avec la fixation de véhicule (30 ; 230) à proximité de l'axe de pivotement (46, 47, 54) et une allure de courbure d'au moins un des contours de courbure s'étend en arc autour de l'axe de pivotement (46, 47, 54).

4. Attelage selon l'une quelconque des revendications précédentes, **caractérisé en ce que** le premier élément à complémentarité de forme (71) et le premier contre-élément à complémentarité de forme (72) forment un palier de pivotement pour un réglage en pivotement du deuxième élément à complémentarité de forme (81) et du deuxième contre-élément à complémentarité de forme (82) dans la position de fixation.

5. Attelage selon l'une quelconque des revendications précédentes, **caractérisé en ce que** dans la position de fixation, une distance transversale entre des premières surfaces à complémentarité de forme opposées l'une à l'autre de la paire formée par le premier élément à complémentarité de forme (71) et le premier contre-élément à complémentarité de forme est supérieure à une distance transversale entre des deuxièmes surfaces à complémentarité de forme opposées l'une à l'autre et orientées de façon sensiblement identique aux premières surfaces à complémentarité de forme de la paire formée par le deuxième élément à complémentarité de forme (81) et le deuxième contre-élément à complémentarité de forme (82).

6. Attelage selon l'une quelconque des revendications précédentes, **caractérisé en ce qu'**au moins une surface inclinée est prévue au niveau de la paire formée par le premier élément à complémentarité de forme (71) et le premier contre-élément à complémentarité de forme (72), dans lequel l'au moins une surface inclinée et l'au moins une surface de calage (89, 90) de la paire formée par le deuxième élément à complémentarité de forme (81) et le deuxième contre-élément à complémentarité de forme (82) sont inclinées dans le même sens et l'au moins une surface inclinée présente une inclinaison plus forte par rapport à un axe de réglage (86) s'étendant en direction de la prise à complémentarité de forme que l'au moins une surface de calage (89, 90).

7. Attelage selon l'une quelconque des revendications précédentes, **caractérisé en ce que** la paire formée par le premier élément à complémentarité de forme (71) et le premier contre-élément à complémentarité de forme (72) soutiennent le bras d'attelage (20) au niveau de la fixation de véhicule (30 ; 230) dans une première direction d'axe, en particulier sensiblement verticale, par exemple une direction Z, qui s'étend sensiblement parallèlement à l'au moins une surface de calage (89, 90) du deuxième élément à complémentarité de forme (81) et du deuxième contre-élément à complémentarité de forme (82).

8. Attelage selon l'une quelconque des revendications précédentes, **caractérisé en ce qu'**une surface d'appui (91, 92) s'étendant transversalement à la surface de calage (89, 90) pour l'appui au niveau d'une contre-surface d'appui (93, 94), en particulier au niveau d'un épaulement d'appui, est agencée sous au moins une surface de calage (89, 90) de la paire formée par le deuxième élément à complémentarité de forme et contre-élément à complémentarité de forme (82).

9. Attelage selon l'une quelconque des revendications précédentes, **caractérisé en ce que** l'au moins une surface de calage (89, 90) pour l'appui dans une deuxième direction d'axe horizontale, en particulier une direction X, s'étend de manière sensiblement verticale et/ou la ou une surface d'appui (91, 92) et la ou une contre-surface d'appui (93, 94) s'étendent de manière sensiblement horizontale.

10. Attelage selon la revendication 8 ou 9, **caractérisé en ce que** la surface d'appui (91, 92) et la contre-surface d'appui (93, 94) entrent en contact dans la position de fixation uniquement lorsqu'une charge d'impact apparaît dans la première direction d'axe, par exemple le long d'un axe Z, ou que la paire formée par le premier élément à complémentarité de forme (71) et le premier contre-élément à complémentarité de forme (72), lorsqu'elle est en prise à complémentaire de forme, sollicite la surface d'appui (91, 92) en contact avec la contre-surface d'appui (93, 94).

11. Attelage selon l'une quelconque des revendications précédentes, **caractérisé en ce qu'**il présente un entraînement de fixation pour le réglage de l'agencement à complémentarité de forme dans la prise à complémentarité de forme et/ou hors de la prise à complémentarité de forme.

12. Attelage selon la revendication 11, **caractérisé en ce qu'**un élément d'entraînement (62) de l'entraînement de fixation entre la paire formée par le premier élément à complémentarité de forme et le premier contre-élément à complémentarité de forme (72) et la paire formée par le deuxième élément à complémentarité de forme (81) et le deuxième contre-élément à complémentarité de forme (82) vient en prise entre la fixation de véhicule et le bras d'attelage (20).

13. Attelage selon l'une quelconque des revendications précédentes, **caractérisé en ce que** le bras d'attelage (20) dans la position de fixation est soutenu exclusivement au niveau des paires formées par le premier élément à complémentarité de forme (71) et le premier contre-élément à complémentarité de forme (72) et le deuxième élément à complémentarité de forme (81) et le deuxième contre-élément à complémentarité de forme (82).

14. Attelage selon l'une quelconque des revendications précédentes, **caractérisé en ce qu'**il présente un agencement de guidage (33), en particulier un guidage à coulisse, pour le guidage du bras d'attelage (20) entre la position d'utilisation (G) et la position de non-utilisation (N), dans lequel l'agencement de guidage (33) est au moins sensiblement sans effort dans une position de serrage, dans laquelle les contours à complémentarité de forme sont dans une prise à complémentarité de forme de serrage l'un avec l'autre.

15. Attelage selon l'une quelconque des revendications précédentes, **caractérisé en ce que** les contours à complémentarité de forme de la fixation de véhicule (30 ; 230) sont agencés au niveau d'un corps de fixation de véhicule (120 ; 220) en particulier de type bloc de la fixation de véhicule (30 ; 230) et/ou que la fixation de véhicule (30 ; 230) est vissée avec un seul boulon fileté (140 ; 240) avec un support transversal (12) présentant un agencement de supports (11) et pour la fixation à l'arrière (H) du véhicule automobile (F).
